# EUROPÄISCHE PATENTSCHRIFT

(11) **EP 2 240 007 B1**
(45) Veröffentlichungstag und Bekanntmachung des Hinweises auf die Patenterteilung: **25.01.2012**
(21) Anmeldenummer: 09709987.3
(22) Anmeldetag: 03.02.2009
(51) Int. Cl.: A01C 5/06

(54) **SÄMASCHINE**
SEEDER
SEMOIR

(30) Priorität: 12.02.2008 DE 102008008552
(43) Veröffentlichungstag der Anmeldung: 20.10.2010
(73) Patentinhaber: Amazonen-Werke H. Dreyer GmbH & Co. KG, 49205 Hasbergen (DE)
(72) Erfinder: POKRIEFKE, Michael, 27798 Hude (DE); DREYER, Justus, 49076 Osnabrück (DE)
(86) Internationale Anmeldenummer: PCT/EP2009/000700
(87) Internationale Veröffentlichungsnummer: WO 2009/100833

(56) Entgegenhaltungen:
- EP-A- 1 478 220
- WO-A-98/42177
- DE-A1- 2 018 178
- DE-A1- 2 752 646
- US-A- 4 608 933
- US-A- 4 762 075

## Beschreibung

Die Erfindung betrifft eine Sämaschine gemäß des Oberbegriffes des Patentanspruches 1.

Eine derartige Sämaschine ist beispielsweise in der EP 14 78 220 B1 beschrieben. Diese Sämaschine weist Säschare auf. Diese Säschare sind als Meißelschare ausgebildet und über Halterungen in aufrechter Ebene bewegbar am Rahmen der Sämaschine in mehreren Querreihen beabstandet hintereinander, sowie seitlich beabstandet zueinander angeordnet. Diese Säschare weisen einen Scharstiel auf. Der Scharstiel weist an seiner Unterseite eine als Meißel ausgebildete Aufreißvorrichtung zum Schaffen einer Säfurche im Boden auf. Bei dem Schaffen der Säfurche wirft der Meißel Bodenmaterial aus der Säfurche heraus. Dieses wird in seitlicher Richtung geworfen und von hinter dem Scharstiel angeordneten, als Leitvorrichtungen ausgebildeten Tiefenführungsrollen aufgefangen. Diese Leitvorrichtungen legen das aus der Säfurche herausgeworfene Bodenmaterial in gezielter Weise wieder durch Zurückführen in die Säfurche oberhalb des zwischenzeitlich hinter dem Meißel über Leitungen abgelegten Saatgutes wieder ab. Somit wird das Saatgut mit Bodenmaterial bedeckt.

Insbesondere wenn das Saatgut relativ tief im Boden abgelegt werden muss, damit es im Bereich der wasserführenden Bodenschicht abgelegt wird, wird sehr viel Bodenmaterial aus der Säfurche herausgeworfen. Wenn das sämtliche aus der Säfurche herausgeworfene Bodenmaterial wieder in die Säfurche zurückgefördert wird, wird das Saatgut mit einer zu dicken Bodenschicht bedeckt. Weiterhin kann es bei einer engen Anordnung der Säschare zueinander zu Verstopfungen kommen.

In der DE-A-2018178 ist ein Pflug mit wenigstens zwei hintereinander angeordneten Pflugscharen beschrieben, von denen die vordere eine Erdfurche öffnet und die hintere diese wieder verschließt. Hierbei kann mit einem Saatgutbehälter und einer Verteileinrichtung in die geöffnete Erdfurche Saatgut eingebracht werden.

DE-A-2752646 wird eine Vorrichtung zum Anheben von Erdboden ohne Wenden beschrieben. Mit einer Schneideinrichtung zur Herstellung eines vertikalen Schnittes und einem Anhebeschuh mit einer horizontalen Schneideeinrichtung wird hier die oberste Schicht des Erdbodens angehoben um vorwiegend Zusatzmaterialien in den Grund einzubringen.

Der Erfindung liegt die Aufgabe zugrunde, eine Sämaschine mit möglichst verstopfungsfrei arbeitenden Säscharen mit einfachen Mitteln zu schaffen, wobei das aus den Säfurchen geworfene Erdreich von den Leitvorrichtungen seitlich neben der Säfurchen und benachbarter Säfurchen abgelegt werden soll.

Diese Aufgabe wird erfindungsgemäß dadurch gelöst, dass die Leitvorrichtung als pflugähnliches in sich verdrehtes Leitflächenelement ausgebildet ist, dass das Leitflächenelement an dem zumindest an einem Scharstiel befestigten Säschar befestigt ist, dass die Leitvorrichtung schräg zur Fahrtrichtung verlaufend angeordnet und nur einseitig schräg ausgerichtet verlaufend ausgebildet ist, dass das Leitflächenelement die Breite des Säschares beidseitig, jedoch mit wesentlich unterschiedlichen Längemaß überragt. Infolge dieser Maßnahmen wird ein sehr einfaches Leitflächenelement zum Leiten des aus den Säfurchen herausgeworfenen Bodenmaterial geschaffen, wobei die Leitfläche so angestellt und geformt ist, dass das Bodenmaterial im Wesentlichen seitlich neben der Säfurche, ohne das wesentliches Bodenmaterial auf benachbarte Säfurchen gelangt, abgelegt wird. Als vorteilhaft hat sich in vielen Fällen erwiesen, dass das von einem Säschar zur Schaffung der Säfurchen aus der Säfurche herausgeförderte Bodenmaterial nur auf einer Seite der Säfurche abgelegt wird. Dies geschieht durch die entsprechende Anordnung und Ausrichtung der Leitvorrichtungen in efindungsgemäßer Weise.

Um die gezielte Ablage des Bodenmaterials seitlich neben der Säfurche auch bei hohen Fahrgeschwindigkeiten sicherzustellen, ist vorgesehen, dass die längere Seite der Leitfläche bezogen auf die Mitte des Schares mind. 10x länger als die kürzere Seite der Leitfläche bezogen auf ihre Längserstreckung ist.

Eine einfache Ausgestaltung der Leitfläche zur einseitig seitlichen Ablage des aus der Säfurche herausgeförderten Bodenmaterials neben der Säfurche lässt sich dadurch erreichen, dass die Leitfläche zumindest annähernd einem Teilsektor eines zylindrischen Körpers entspricht.

Eine vorteilhafte Anstellung der Leitfläche auch für hohe Fahrgeschwindigkeiten lässt sich dadurch erreichen, dass die Leitfläche mit einem Winkel zwischen 10° und 30°, vorzugsweise etwa 20° zur Fahrtrichtung angestellt ist.

Eine einfache Ausgestaltung des Schare mit Leitflächenelement wird dadurch erreicht, dass das Schar einen aufrechten Scharstiel aufweist, dass an dem Scharstiel das Leitflächenelement angeordnet ist.

Um das Leitflächenelement an dem Scharstiel anordnen zu können sowie ein vorteilhaft ausgestaltetes Aufreißelement zur Schaffung der Säfurche zu schaffen, ist vorgesehen, dass am unteren Ende des Scharstiels und unterhalb des Leitflächenelementes ein an dieses unmittelbar anschließendes nach vom ragendes domähnliches Aufreißelement angeordnet ist.

Die Leitflächenelemente benachbarter Säschare können alle gleich ausgerichtet sein, es ist jedoch auch möglich, diese Leitflächenelemente so anzustellen, dass die Leitflächenelemente benachbarter Säschare spiegelbildlich zueinander angeordnet sind.

Um in einfacher Weise Saatgut und Düngemittel nicht durch einen gemeinsamen Auslauf zusammen in der Säfurche abzulegen, sondern Saatgut und Düngemittel getrennt durch eine Bodenschicht im Boden abzulegen, ist vorgesehen, dass jeder Saatleitung und jeder Düngemittelleitung eines Säschares ein eigener Scharstiel, die in Fahrtrichtung und quer zur Fahrtrichtung und quer zur Fahrtrichtung beabstandet zueinander angeordnet sind, zugeordnet ist, dass jedem Scharstiel eine Säfurche schaffendes Element zugeordnet ist, dass an jedem Scharstiel ein Leitflächenelement angeordnet ist, dass die Leitflächenelemente eines Schares spiegelbildlich zueinander angeordnet sind.

Weitere Einzelheiten der Erfindung sind der Beispielsbeschreibung und den Zeichnungen zu entnehmen. Hierbei zeigen
- Fig. 1: ein erfindungsgemäßes Säschar in perspektivischer Darstellung,
- Fig. 2: das erfindungsgemäße Säschar in perspektivischer Ansicht, jedoch von der anderen Seite als in Fig. 1 gesehen,
- Fig. 3: das Säschar in der Ansicht von vome,
- Fig. 4: die an dem Säschar angebrachte Leitvorrichtung in perspektivischer Darstellung,
- Fig. 5: die an dem Säschar angebrachte Leitvorrichtung in der Ansicht von vome,
- Fig. 6: die an dem Säschar angebrachte Leitvorrichtung in Seitenansicht,
- Fig. 7: die an dem Säschar angebrachte Leitvorrichtung in der Draufsicht,
- Fig. 8: einige der nebeneinander angeordneten Säschare einer Querreihe in der Draufsicht,
- Fig. 9: einige der nebeneinander angeordneten Säschare einer Querreihe in der Draufsicht mit anders zueinander als in Fig. 7 angestellten Leitvorrichtungen,
- Fig. 10: ein anders ausgestaltetes Säschar in perspektivischer Darstellung,
- Fig. 11: das Säschar gemäß Fig. 10 in Seitenansicht,
- Fig. 12: das Säschar gemäß Fig. 10 in der Draufsicht,
- Fig. 13: einige nebeneinander angeordnete Säschare gemäß den Fig. 10 bis 12,
- Fig. 14: ein weiteres Säschar in perspektivischer Darstellung, wobei die Leitvorrichtung und die Säschare spiegelbildlich zu dem Säschar gemäß Fig. 10 angeordnet sind,
- Fig. 15: einige nebeneinander angeordnete Säschare einer Querreihe in der Draufsicht, wobei abwechselnd die Säschare gemäß den Fig. 10-12 und Fig. 14 nebeneinander angeordnet sind,
- Fig. 16: ein weiteres Säschar in perspektivischer Darstellung,
- Fig. 17: das Säschar gemäß Fig. 16 in Seitenansicht,
- Fig. 18: das Säschar gemäß Fig. 16 in der Vorderansicht,
- Fig. 19: das Säschar gemäß Fig. 16 in der Draufsicht und
- Fig. 20: einige nebeneinander angeordnete Säschare, gemäß den Fig. 16-19 einer Querreihe in der Draufsicht.

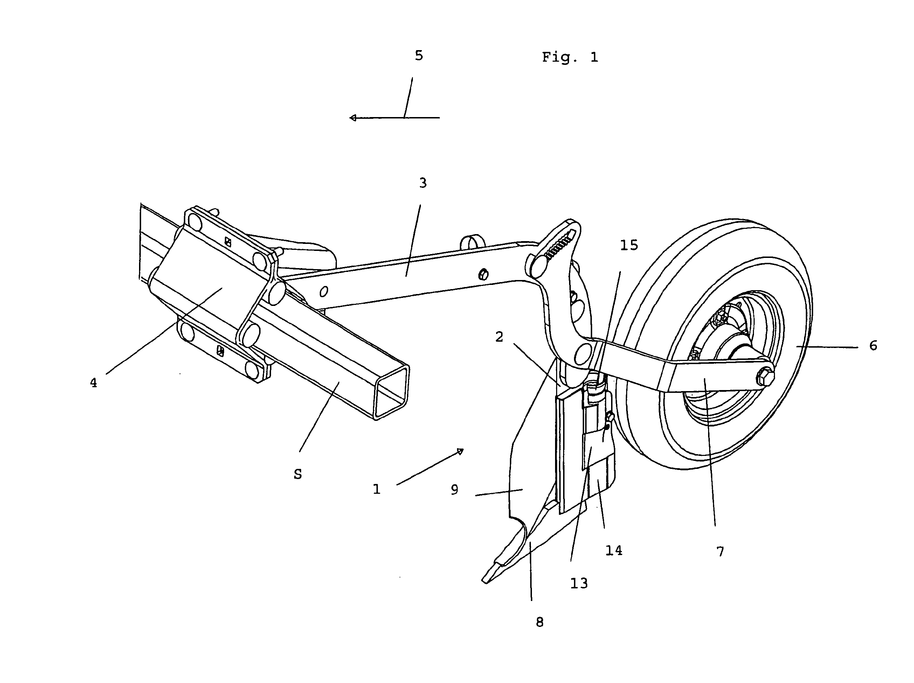

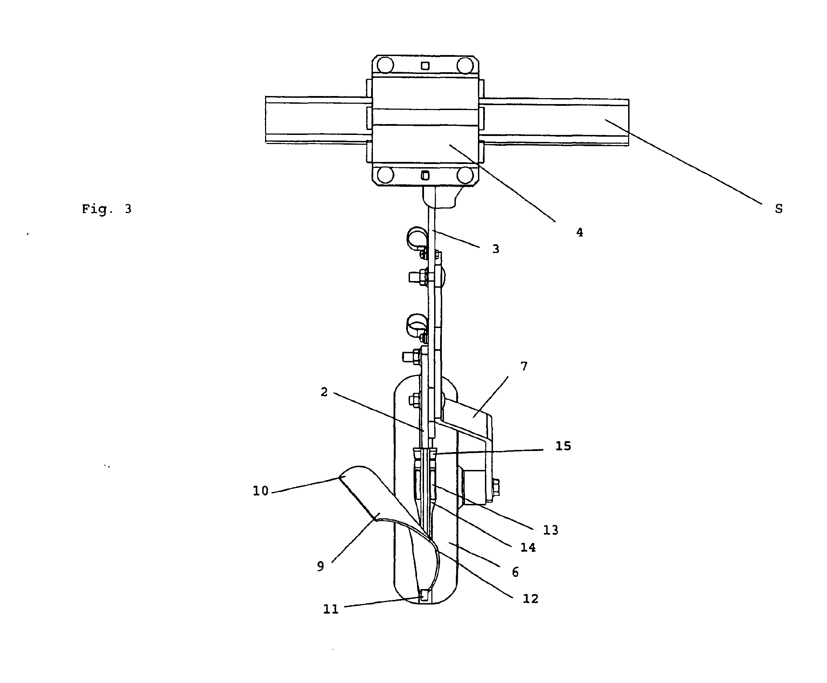

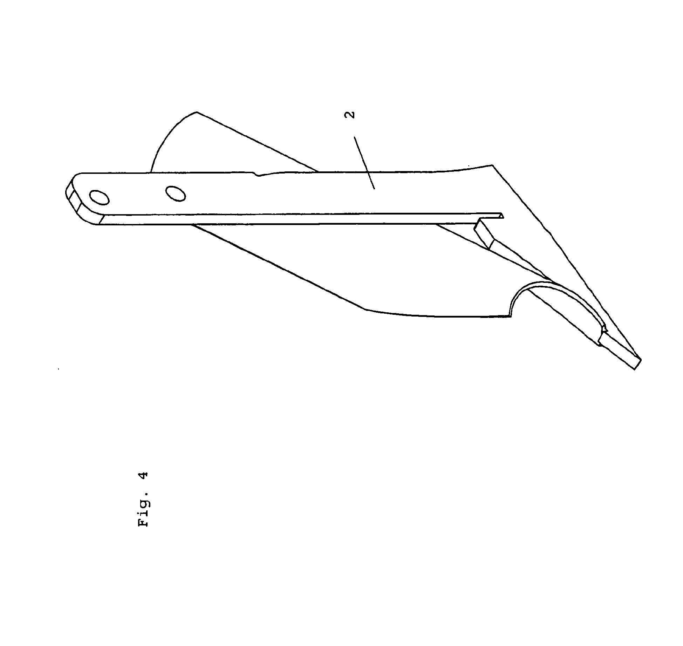

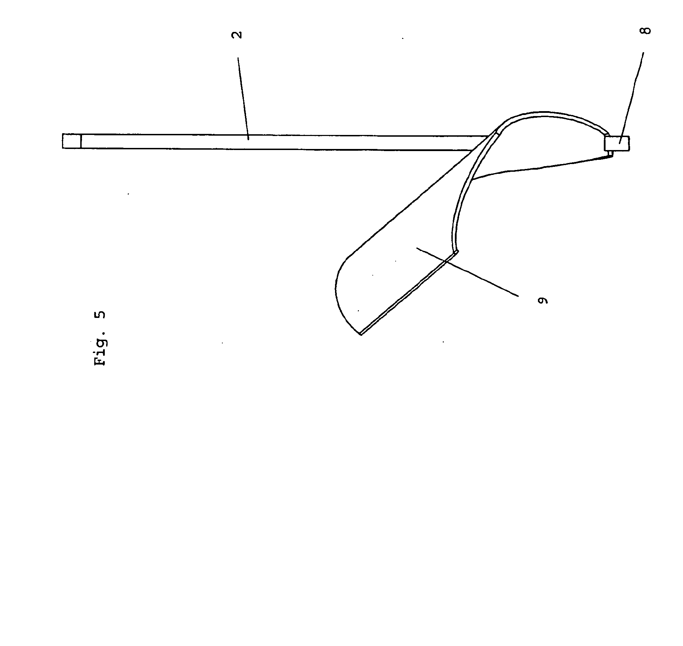

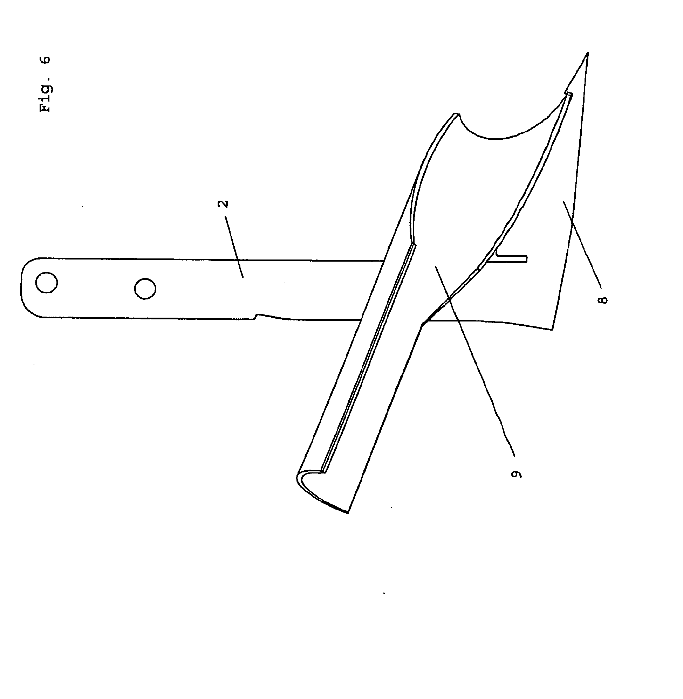

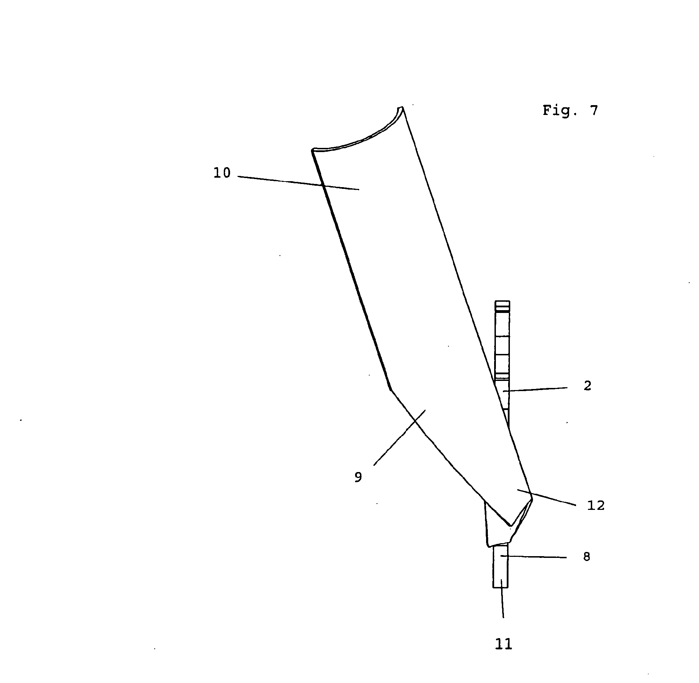

Die Säschare 1 gemäß den Fig. 1 bis 8 sind in nicht dargestellter Weise an dem Rahmen einer Sämaschine in mehreren Querreihen in Abstand hintereinander und seitlich im beabstandet zueinander angeordnet. Eine derartige Sämaschine ist für die Mulchsaat bzw. die Direktsaat vorgesehen. Die Säschare 1 weisen einen Scharstiel 2 auf, der über einen Scharhalter 3 mittels einer Lagereinrichtung an sich quer zur Fahrtrichtung 5 erstreckenden Scharbalken 6 des Rahmens der Sämaschine in aufrechter Ebene bewegbar angeordnet sind. Hinter den Säscharen 1 ist jeweils ein als Tiefenführungsrolle 6 ausgebildetes Tiefenführungselement in einstellbarer Weise über einen Haltearm 7 an dem Scharhalter 3 in einstellbarer Weise befestigt.

Der Scharstiel 2 weist an seinem unteren Ende ein nach vom ragendes dornähnliches Aufreißelement 8 auf. Dem Scharstiel 2 ist oberhalb des domähnlichen Aufreißelementes 8 ein als Leitvorrichtung ausgebildetes Leitflächenelement 9 zugeordnet. Dieses Leitflächenelement 9 ist an dem Scharstiel 2 und dem Aufreißelement 8 befestigt. Das Leitflächenelement 9 ist schräg zur Fahrtrichtung 5 verlaufend angeordnet und nur einseitig schräg ausgerichtet verlaufend ausgebildet. Die Leitvorrichtung ist als pflugähnliches in sich verdrehtes Leitflächenelement 9 ausgebildet. Das Leitflächenelement 9 überragt die Breite des Scharstiels 2 und des Aufreißelementes 8 des Säschares 1 beidseitig, jedoch jeweils mit wesentlich unterschiedlichem Längenmaß. Hierbei haben Versuche gezeigt, dass die längere Seite 10 der Leitfläche 9, bezogen auf die Mitte 11 des Schares 1, mindestens 10x länger als die kürzere Seite 12 der Leitfläche 9, bezogen auf ihre jeweilige Längserstreckung, ist. Die Leitfläche 9 ist mit einem Winkel zwischen 10° und 30°, vorzugsweise etwa 20° zur Fahrtrichtung 5 angestellt, um relativ hohe Fahrgeschwindigkeiten zu ermöglichen und so den Boden nicht zu weit zu werfen.

Die Leitfläche 9 entspricht zumindest einem Teilsektor eines zylindrischartigen Körpers, wie insbesondere die Fig. 1 bis 6 zeigen.

Das Leitflächenelement 9 ist, wie bereits erwährt, am unteren Ende des Scharstiels 2 angeordnet und zwar so, dass unterhalb des Leitflächenelementes 9 noch ein an dieses unmittelbar anschließendes nach vom ragendes dornähnliches Aufreißelement 8 angeordnet werden kann.

Hinter dem Scharstiel 2 ist mit diesem im Wesentlichen fluchtend mittels einer Haltelasche 13 der Saatgut- und/oder Düngemittelauslauf 14 angeordnet, an dessen oberes Ende 15 eine nicht dargestellten Saatgut- und/oder Düngerleitung der Verteileinrichtung der Sämaschine angeordnet ist, um in der von dem Säschar 1 geschaffenen Säfurche das auszubringende Saatgut und gegebenenfalls die auszubringenden Düngemittel in der vorgesehenen Menge in den Boden einzubringen.

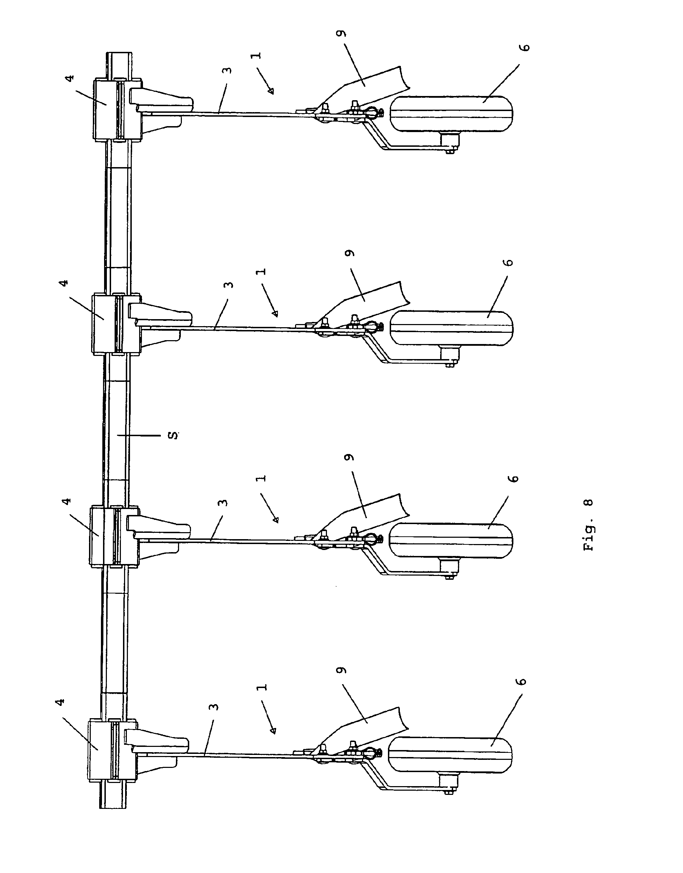

Wie die Fig. 8 zeigt, lassen sich die Leitflächenelemente 9 benachbarter Säschare 1 so zueinander anordnen, dass sie alle in die gleiche Richtung weisen.

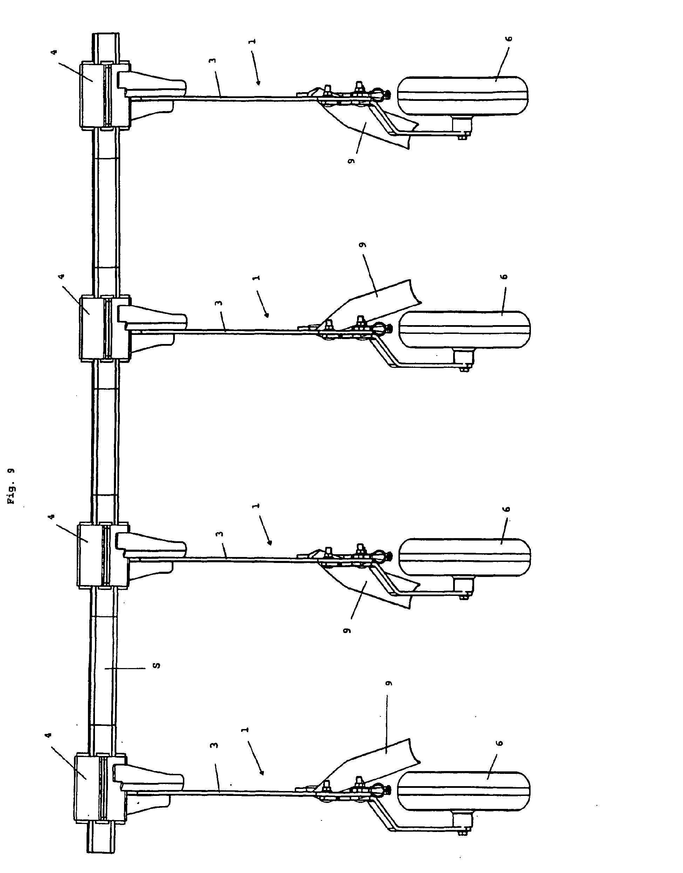

Gemäß dem Ausführungsbeispiel nach Fig. 9 sind die Leitflächenelemente 9 benachbarter Säschare 1 spiegelbildlich zueinander angeordnet.

Die Funktionsweise des an dem Säschar 1 angeordneten Leitflächenelementes 9 ist folgende:

Mittels des Säschares 1 wird durch das domähnliche Aufreißelement 8 in Verbindung mit dem Leitflächenelement 9 eine Säfurche in den Boden gerissen. Hierdurch wird das zur Schaffung der Säfurche aus dem der Säfurche heraus zu fördernde Material durch die pflugähnlich in sich verdrehte Leitfläche 9 der Boden seitlich neben die Säfurche geleitet und durch die entsprechende Verdrehung der Leitfläche 9 in sich und der entsprechenden Winkelanstellung zwischen 10° und 30°, vorzugsweise 20° zur Fahrtrichtung 5 wird der Boden seitlich der Säfurche abgelegt, ohne auf die benachbarten Säfurchen geworfen zu werden. In die von dem Aufreißelement 8 und dem Leitflächenelement 9 geschaffene Furche wird über den Auslauf 14 je nach Einsatzbedingungen Saatgut und evtl. zusätzlich Dünger abgelegt. Hinter dem Aufreißelement 8 und dem Scharstiel fällt etwas Boden in die Säfurche zurück und bedeckt das in der Säfurche abgelegte Saatgut und evtl. die zusätzlich abgelegten Düngemittel mit einer entsprechenden Bodenschicht. Durch die Tiefenführungsrolle 6 wird das Säschar 1 in der Tiefe geführt, sowie der Boden oberhalb des Saatgutes entsprechend angedrückt.

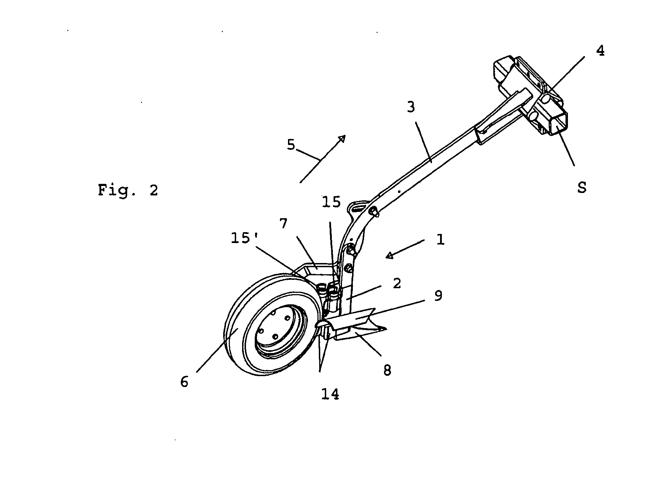

In Fig. 2 ist bereits gezeigt, dass einem Schar zwei Ausläufe 14 und 14' mit dem oberen Enden 15 und 15', an denen von Dosier- und Verteileinrichtung kommenden Ausbringleitung angeschlossen sind zugeordnet. Über den Auslauf 14 wird Saatgut und über den Auslauf 14' Düngemittel im Boden abgelegt.

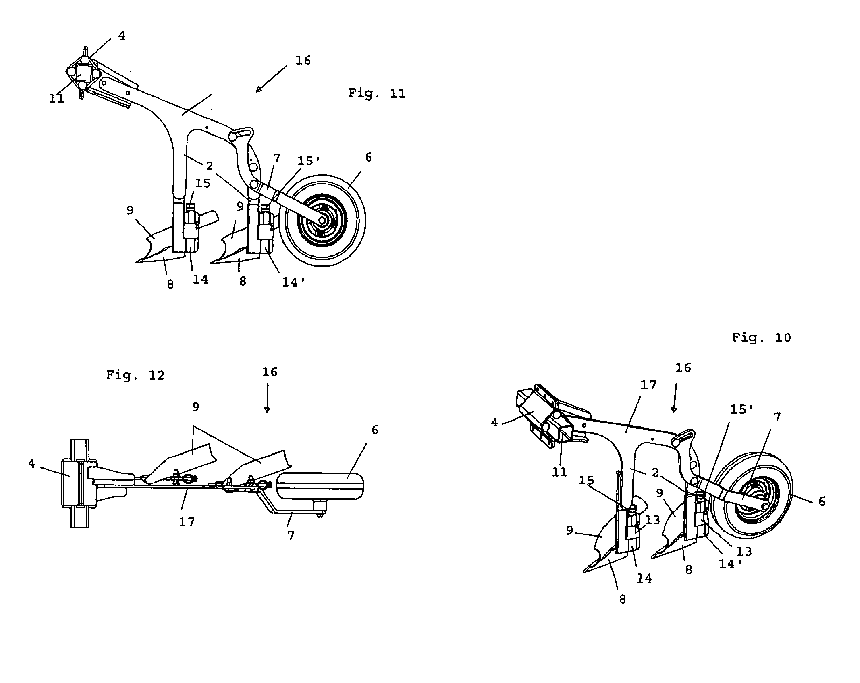

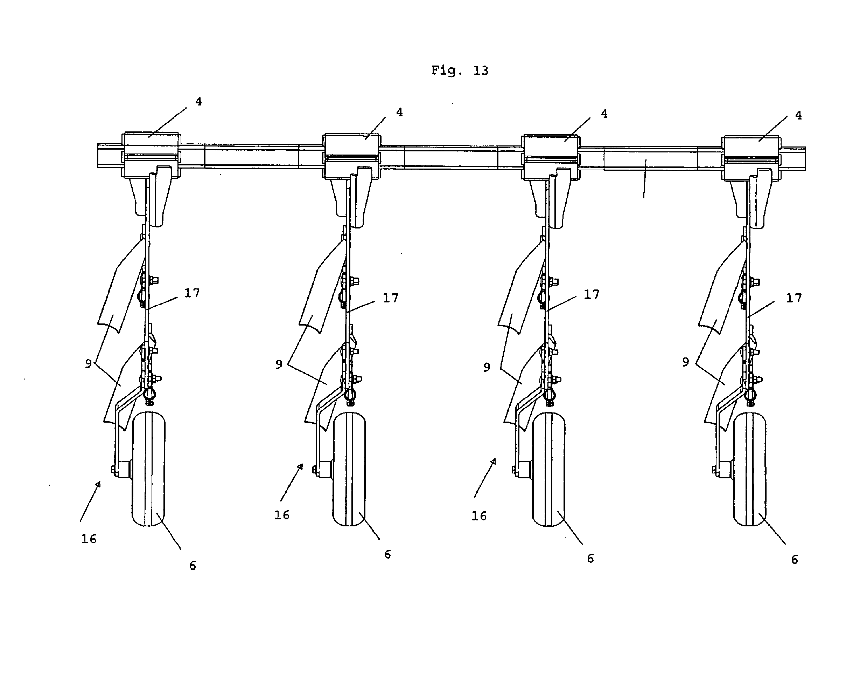

Die Fig. 10 - 13 zeigen Säschare 16, die jeweils zwei beabstandet hintereinander und seitlich versetzt zueinander angeordnete Scharstiele 2 mit den domähnlichen Aufreißelementen 8 und den vorbeschriebenen Leitflächenelementen 9 aufweisen. Die Scharstiele 2 sind an einer Scharhalterung 17, die über der Lagereinrichtung 4 an einem Scharquerbalken 11 befestigt sind, angeordnet. Hinter dem letzten Scharstiel 2 ist an der Scharhalterung 17 über den Haltearm 2 die Tiefenführungsrolle 6 in höhenverstellbarer Weise angeordnet. Hinter den Scharstielen 2 sind jeweils mittels der Haltelasche 13 jeweils ein Auslauf 14, 14', dessen oberes Ende 15, 15' an Ausbringleitung angeschlossen ist, zugeordnet. Dem vorderen Auslauf 14 wird entweder Saatgut oder Düngemittel und dem hinteren Auslauf 14' entweder Saatgut oder Düngemittel zugeführt, so dass Saatgut und Düngemittel getrennt in den von den Scharstielen 2 in Verbindung mit den Aufreißelementen 8 und den Leitflächenelementen 9 geschaffenen Säfurchen abgelegt werden. Gemäß dem Ausführungsbeispiel nach den Fig. 10-13 sind die Leitflächenelemente 9 sämtlich in gleicher Richtung angestellt.

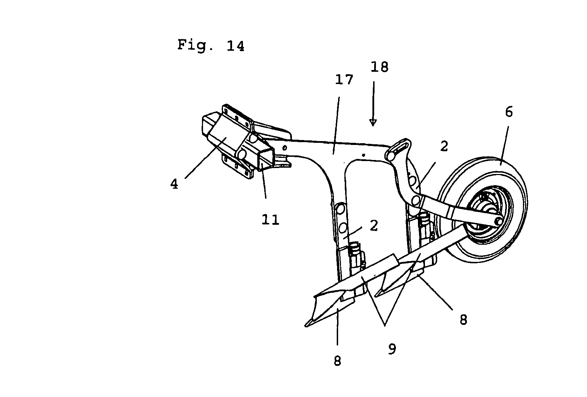

Das Säschar 18 gemäß Fig. 14 unterscheidet sich von dem Säschar 16 gemäß den Fig. 10-12 dadurch, dass die Leitflächenelemente und die Scharstiele 2 spiegelbildlich zu der Ausführung nach Fig. 10 bis 12 angeordnet sind.

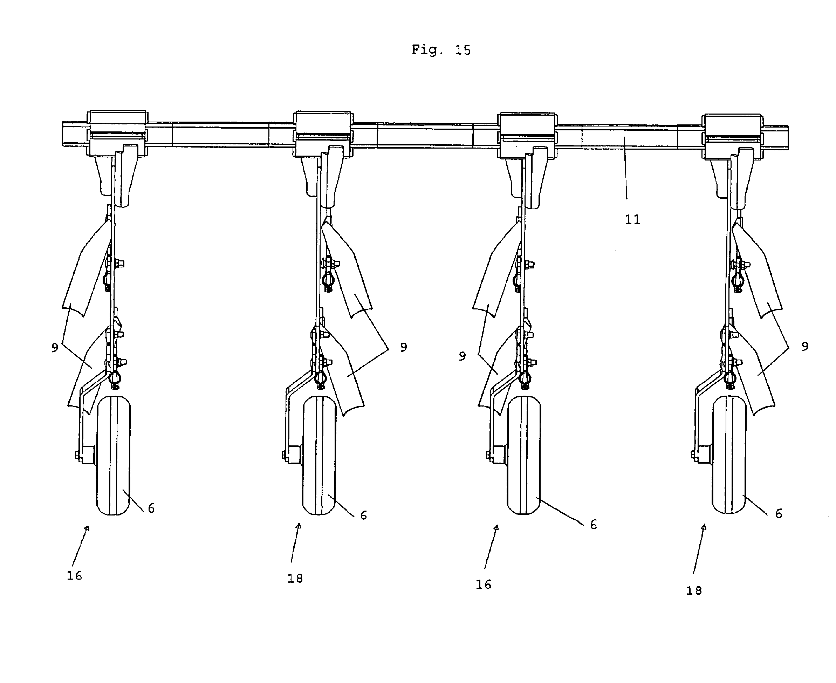

Die Fig. 15, zeigt die abwechselnde Anordnung der Säschare 16, 18 gemäß Fig. 10-12 und der Fig. 14 an einem Scharbalken 11.

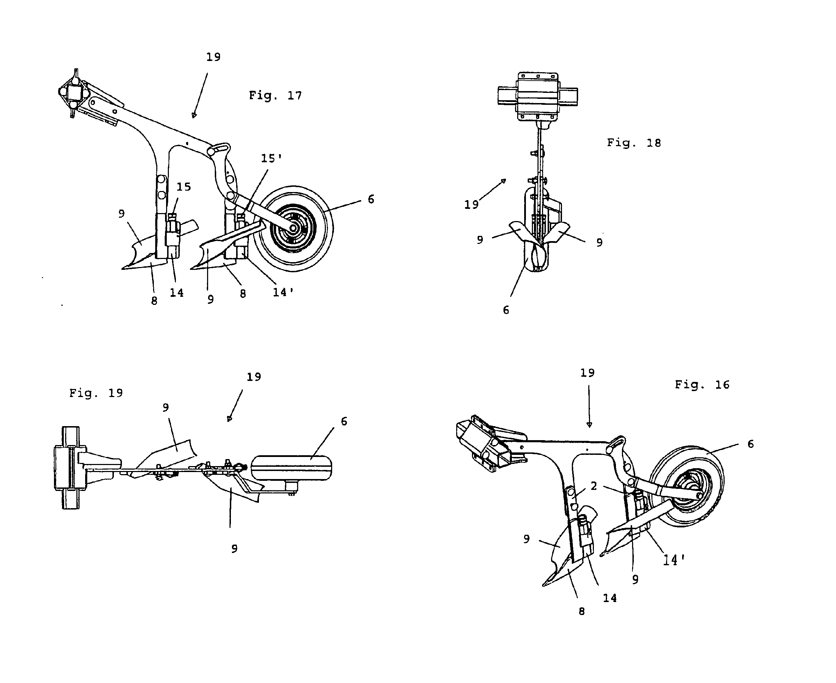

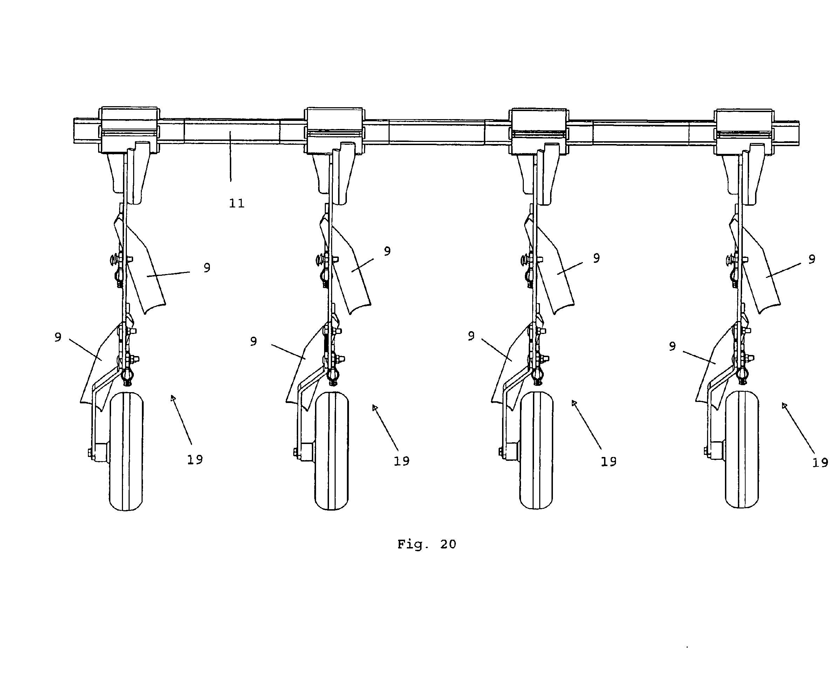

Die Säschare 19 gemäß den Fig. 16-20 unterscheiden sich von den Säscharen 16, 18 gemäß den Fig. 10-15 dadurch, dass die Leitflächenelemente 9 des vorderen und hinteren Scharstieles 2 eines Säschares 19 spiegelbildlich zueinander angeordnet sind.

## Patentansprüche

1. Sämaschine zum Ausbringen von Saatgut und/oder Düngemitteln mit einem Rahmen, Vorratsbehälter, Meißel- oder Zinkensäscharen und Leitvorrichtungen zum gezielten Ablegen des von den zumindest einen Scharstiel (2) aufweisenden Säscharen (1,16,18,19) beim Schaffen der Säfurche aus der Säfurche geworfenen Bodenmateriales, wobei die Säschare (1,16,18,19) am unteren Ende des Scharstiels (2) ein nach vorn ragendes, dornähnliches Aufreißelement aufweisen, **dadurch gekennzeichnet, dass** die Leitvorrichtung als pflugähnliches in sich verdrehtes Leitflächenelement (9) ausgebildet ist, dass das Leitflächenelement (9) an dem zumindest an einem Scharstiel (2) befestigten Säschar (1,16,18,19) befestigt ist, dass das Leitflächenelement (9) schräg zur Fahrtrichtung (5) verlaufend angeordnet und nur einseitig schräg ausgerichtet verlaufend ausgebildet ist, dass das Aufreißelement unterhalb des Leitflächenelements angeordnet ist und dass das Leitflächenelement (9) die Breite des Aufreißelements (8) und des Scharstiels (2) des Säschares (1) beidseitig, jedoch mit wesentlich unterschiedlichem Längemaß überragt.

2. Sämaschine nach Anspruch 1, **dadurch gekennzeichnet, dass** die längere Seite (10) der Leitfläche (9), bezogen auf die Mitte (11) des Schares (1), mind. 10x länger als die kürzere Seite (12) der Leitfläche (9) bezogen auf ihre Längserstreckung ist.

3. Sämaschine nach Anspruch 1, **dadurch gekennzeichnet, dass** die Leitfläche (9) zumindest annähernd einem Teilsektor eines zylindrischartigen Körpers entspricht

4. Sämaschine nach Anspruch 1, **dadurch gekennzeichnet, dass** die Leitfläche (9) mit einem Winkel zwischen 10° und 30°, vorzugsweise etwa 20° zur Fahrtrichtung (5) angestellt ist.

5. Sämaschine nach einem oder mehreren der vorstehenden Ansprüche, **dadurch gekennzeichnet, dass** das Schar (1,16,18,19) einen aufrechten Scharstiel (2) aufweist, dass an dem Scharstiel (2) das Leitflächenelement (9) angeordnet ist.

6. Sämaschine nach einem oder mehreren der vorstehenden Ansprüche, **dadurch gekennzeichnet, dass** die Leitflächenelemente (9) benachbarter Säschare (1) spiegelbildlich zueinander angeordnet sind.

7. Sämaschine nach Anspruch 1, **dadurch gekennzeichnet, dass** jeder Saatleitung und jeder Düngemittelleitung eines Säschares (19) ein eigener Scharstiel (2), die in Fahrtrichtung und quer zur Fahrtrichtung und quer zur Fahrtrichtung beabstandet zueinander angeordnet sind, zugeordnet ist, dass jedem Scharstiel (2) eine Säfurche schaffendes Element (8) zugeordnet ist, dass an jedem Scharstiel (2) ein Leitflächenelement (9) angeordnet ist, dass die Leitflächenelemente (9) eines Schares (19) spiegelbildlich zueinander angeordnet sind.

## Claims

1. Seed drill for discharging seed material and/or fertilizers, said seed drill having a frame, hopper, chisel or tine coulters and guide devices for the targeted depositing of the soil material thrown out of the sowing furrow by the sowing coulters (1, 16, 18, 19) when creating the sowing furrow, said sowing coulters having at least one coulter shaft (2), wherein at the bottom end of the coulter shaft (2) the sowing coulters (1, 16, 18, 19) have a mandrel-like scarifying part which protrudes forward, **characterized in that** the guide device is realized as a plough-like, twisted guide face part (9), **in that** the guide face part (9) is secured on the sowing coulter (1, 16, 18, 19) which is secured at least on a coulter shaft (2), **in that** the guide face part (9) is arranged extending inclinedly with respect to the direction of travel (5) and is realized extending only on one side oriented inclinedly, **in that** the scarifying part is arranged below the guide face part and **in that** the guide face part (9) projects beyond the width of the scarifying part (8) and of the coulter shaft (2) of the sowing coulter (1) on both sides, but at lengths that vary in a considerable manner.

2. Seed drill according to Claim 1, **characterized in that** the longer side (10) of the guide face (9), with reference to the centre (11) of the coulter (1), is at least 10 x longer than the shorter side (12) of the guide face (9) with reference to its longitudinal extension.

3. Seed drill according to Claim 1, **characterized in that** the guide face (9) corresponds at least approximately to a part sector of a cylindrical-like body.

4. Seed drill according to Claim 1, **characterized in that** the guide face (9) is set at an angle of between 10° and 30°, preferably approximately 20° with respect to the direction of travel (5).

5. Seed drill according to one or more of the preceding Claims, **characterized in that** the coulter (1, 16, 18, 19) has a vertical coulter shaft (2), **in that** the guide face part (9) is arranged on the coulter shaft (2).

6. Seed drill according to one or more of the preceding Claims, **characterized in that** the guide face parts (9) of adjacent sowing coulters (1) are arranged in a mirror-inverted manner with respect to each other.

7. Seed drill according to Claim 1, **characterized in that** each seed line and each fertilizer line of a sowing coulter (19) has associated therewith its own coulter shaft (2), said coulter shafts being arranged with respect to each other in the direction of travel and transversely with respect to the direction of travel and spaced apart transversely with respect to the direction of travel, **in that** each sowing coulter (2) has associated therewith a part (8) that creates a sowing furrow, **in that** a guide face part (9) is arranged on each coulter shaft (2) and **in that** the guide face parts (9) of a coulter (19) are arranged in a mirror-inverted manner with respect to each other.

## Revendications

1. Soc de semoir pour distribuer des semences et/ou des engrais comportant un châssis, une trémie, des coutres ou des socs à dents et des dispositifs de guidage pour déposer de manière ciblée la terre dégagée du sillon, socs de semoir (1, 16, 18, 19) comportant au moins une tige de soc (2), lors de la réalisation du sillon,
* les socs de semoir (1, 16, 18, 19) comportant à l'extrémité inférieure de la tige de soc (2), un élément de déchirage, analogue à une pointe,
**caractérisé en ce que**
le dispositif de guidage est réalisé sous la forme d'un élément de versoir (9) courbé comme un versoir de charrue,
- l'élément de versoir (9) étant fixé à au moins un soc de semoir (1, 16, 18, 19) fixé à la tige de soc (2),
- l'élément de versoir (9) est installé en biais par rapport à la direction de déplacement (5) et seulement d'un côté,
- l'élément de déchirage est installé sous l'élément de versoir, et
- l'élément de versoir (9) dépasse la largeur de l'élément de déchirage (8) et la tige (2) du soc de semoir (1) des deux côtés, toutefois avec des longueurs essentiellement différentes.

2. Soc de semoir selon la revendication 1,
**caractérisé en ce que**
le côté le plus long (10) du versoir (9) par rapport au milieu (11) du soc (1) est au moins 10 fois plus long que le côté plus court (12) du versoir (9) par rapport à son extension longitudinale.

3. Soc de semoir selon la revendication 1,
**caractérisé en ce que**
le versoir (9) correspond au moins sensiblement à un secteur partiel d'un corps cylindrique.

4. Soc de semoir selon la revendication 1,
**caractérisé en ce que**
le versoir (9) est disposé suivant un angle compris entre 10° et 30°, de préférence un angle d'environ 20°, par rapport à la direction de déplacement (5).

5. Soc de semoir selon l'une quelconque des revendications précédentes,
**caractérisé en ce que**
le soc (1, 16, 18, 19) comporte une tige de soc (2), montante, et l'élément de versoir (9) est installé sur la tige de soc (2).

6. Soc de semoir selon l'une quelconque des revendications précédentes,
**caractérisé en ce que**
les socs de semoir (1) voisins des éléments de versoir (9), sont disposés suivant une symétrie plane.

7. Soc de semoir selon la revendication 1,
**caractérisé en ce qu'**
à chaque conduite de semence et à chaque conduite d'engrais d'un soc de semoir (19), est associée sa propre tige de soc (2) et ces tiges sont écartées dans la direction de déplacement et transversalement à la direction de déplacement, et
- à chaque tige de soc (2) est associé un élément (8) réalisant un sillon à semence,
- à chaque tige de soc (2) est associé un élément de versoir (9), et
- les éléments de versoir (9) d'un soc (19) sont installés de manière symétrique selon un plan.
